# EUROPÄISCHE PATENTANMELDUNG

(11) **EP 4 432 603 A1**
(43) Veröffentlichungstag der Anmeldung: **18.09.2024**
(21) Anmeldenummer: 23162085.7
(22) Anmeldetag: 15.03.2023
(51) Int. Cl.: H04L 9/40, H04L 41/0803, H04L 41/14

(54) **VERFAHREN UND SYSTEM ZUM GESCHÜTZTEN EINRICHTEN VON MINDESTENS EINEM ECHTZEIT-DATENFLUSS IN EINEM KOMMUNIKATIONSSYSTEM**

(71) Anmelder: Siemens Aktiengesellschaft, 80333 München (DE)
(72) Erfinder: Falk, Rainer, 85435 Erding (DE); Fries, Steffen, 85598 Baldham (DE); Schott, Markus, 36166 Haunetal-Stärklos (DE)
(74) Vertreter: Siemens Patent Attorneys

(57) **Zusammenfassung**

Die Erfindung beansprucht ein Verfahren zum geschützten Einrichten von mindestens einem Echtzeit-Datenfluss in einem Kommunikationssystem für eine Echtzeitübermittlung von Daten, welches wenigstens eine erste Domäne (AN) umfassend zumindest eine erste Kommunikationseinrichtung (PLC, vPLC) und wenigstens eine zweite Domäne (PLMN1, PLMN2) umfassend mindestens eine zweite Kommunikationseinrichtung (UE) aufweist, welche jeweils unterschiedliche Kommunikationsschnittstellen zum Einrichten des mindestens einen Datenflusses und/oder unterschiedliche Übertragungsmechanismen zur Übermittlung der Daten in den mindestens einen eingerichteten Echtzeit-Datenfluss verwenden, wobei das Kommunikationssystem eine domänenübergeordnete Echtzeit-Steuerungseinrichtung (TB) umfasst, welche mit den jeweiligen genannten Kommunikationsschnittstellen verbindbar und/oder über welche die Übermittlung der Daten leitbar ist, aufweisend folgende Schritte, die durch die Echtzeit-Steuerungseinrichtung durchgeführt werden:
- Bereitstellen einer digitalen Stellvertretereinrichtung (SV), die die mindestens eine zweite Kommunikationseinrichtung virtuell nachbildet,
- Konfigurieren erster kryptographischer Sicherheitsparameter (SP) in der digitalen Stellvertretereinrichtung, die zum Kommunikationsverbindungsaufbau zum geschützten Einrichten von mindestens einem Echtzeit-Datenfluss virtuell verwendet werden, wobei mit den Sicherheitsparametern das Einrichten selbst und/oder die Daten, die über den mindestens einen eingerichteten Echtzeit-Datenfluss übermittelt werden, geschützt werden,
- Durchführen einer Simulation (SIMR) des geschützt durchzuführenden Einrichtens,
- Ermitteln von zweiten kryptographischen Sicherheitsparameter aus zumindest einem Simulationsergebnis, die zu der Kommunikationsschnittstelle und/oder zu dem Übertragungsmechanismus, welche beide in der wenigstens eine zweite Domäne verwendet werden, passen,
- Konfigurieren der zweiten kryptographischen Sicherheitsparameter in der mindestens einen zweiten Kommunikationseinrichtung, welche zum Kommunikationsverbindungsaufbau für das geschützt durchzuführende Einrichten real verwendet werden.

## Beschreibung

Die Erfindung betrifft ein Verfahren und System zum geschützten Einrichten von mindestens einem Echtzeit-Datenfluss in einem Kommunikationssystem und ein zugehöriges Computerprogrammprodukt.

Im Gegensatz zur Anwendung von Standard Ethernet nach IEEE 802.3 und Ethernet Bridging nach IEEE 802.1Q spielt bei TSN (Time Sensitiv Networks) die Zeit eine wichtige Rolle. Damit ein TSN-Netzwerk mit einer getakteten Ende-zu-Ende-Übertragung von Kommunikationsströmen mit harten Echtzeitanforderungen und damit festen, unverrückbaren Zeitobergrenzen funktioniert, muss jeder Teilnehmer am Kommunikationsnetzwerk eine eigene, interne Uhr und damit ein Grundverständnis für Zeit besitzen. Weiterhin müssen die Uhren aller Teilnehmer, sowohl Endgeräte als auch Ethernet-Switches, synchronisiert sein. Durch die Synchronisation wird sichergestellt, dass alle Teilnehmer stets dem gleichen Kommunikationszyklus folgen und aufeinander abgestimmt zum richtigen Zeitpunkt die richtigen Aktionen ausführen.

TSN erweitert die Standard-Ethernet-Kommunikation um vorhersagbare Übertragungscharakteristiken mit harten und weichen Echtzeitanforderungen. Die durch das Ethernet-Frame-Format vorgegebenen acht Prioritäten bleiben hierbei erhalten. Je nach Bedarf der Anwendung, die über das Netzwerk kommunizieren muss, können zusätzliche Scheduling-Mechanismen für jede einzelne der acht Prioritäten festgelegt werden. Eine typische Anwendung für TSN mit Echtzeitanforderungen ist beispielsweise die Kommunikation einer speicherprogrammierbaren Steuerung (SPS, im engl. PLC = programmable logic controller) mit einem Industrieroboter. Es sind auch andere Echtzeit-Anwendungen z.B. Videostream oder Live-Music-Konzerte denkbar, die eine Echtzeit-Kommunikation erfordern.

Eine auf dem TSN-Standard basierende Echtzeitkommunikation wird in künftigen Automatisierungslösungen eine wesentliche Rolle spielen. Der TSN-Standard selbst ist durch IEEE standardisiert. Darauf aufbauend gibt es jedoch mehrere unterschiedliche Profilierungen und spezifische Erweiterungen. Insbesondere wird derzeit ein Standard IEC/IEEE60802 "Timesensitive networking profile for industrial automation" erarbeitet, der neben einer Profilierung im eigentlichen Sinn zusätzlich auch für die Automatisierung spezifische Erweiterungen/Anpassungen spezifiziert. Es ist möglich, dass mehrere unabhängig administrierte und betriebene TSN-Domänen in eine industrielle TSN-Lösung integriert werden sollen. Dabei kann es sich z.B. um eine offene virtualisierte TSN-Netzwerkinfrastruktur oder Infrastrukturkomponenten von OT-/ IT-Anbietern (OT= operative Technologie, IT = Informationstechnologie) oder Telekommunikations-Anbietern (Telko-Providern) handeln. Dennoch soll es möglich sein, solche nicht IEC/IEEE60802-fähigen oder einfach nur eigenständig betriebenen TSN-Implementierungen in einer industriellen, auf IEC/IEEE60802 mit einer zentralen TSN-Netzwerkkonfiguration (CNC, centralized network configuration) setzenden Automatisierungslösung zu verwenden. Eine spezielle in diesem Szenario auftretende Problemstellung ist das Einrichten (Provisioning) und Verwalten von Sicherheitsparametern wie sogenannte Credentials (z.B. kryptographische Schlüssel, digitale Zertifikate, Authentisierungstoken, Trust Anchor, Identifier) bzw. andere kryptographische Algorithmen. Innerhalb der unterschiedlichen TSN-Admin-Domänen können nicht nur unterschiedliche Formate und Protokolle zur Verwaltung der TSN-Credentials und der damit authentisierbaren TSN-Identitäten vorliegen, sondern diese können unter unterschiedlicher Verantwortung liegen (z.B. OT-Betreiber, IT-Betreiber, Telko-Provider) und sie können auch unterschiedliche Formate aufweisen. Auch können manche Credentials technisch innerhalb eines speziellen TSN-Subsystems verwaltet werden, insbesondere innerhalb eines 5G-Systems, das TSN durch den TSC-Dienst unterstützt (TSC: Time Sensitive Communications). Dieser Dienst ist durch die im 5G-System inhärent vorhandenen Security-Verfahren geschützt. Die TSN-Nutzerdaten und Zeitsynchronisationsnachrichten werden durch die User-Plane-Security geschützt. Das Management der TSN-Funktionalität eines 5G-Systems erfolgt dabei über eine Network Exposure Function NEF, wobei der Zugriff auf die NEF wie durch 3GPP spezifiziert geschützt wird. Der Zugriff auf eine NEF kann direkt erfolgen oder indirekt über das CAPIF-Framework. Bei Nutzung von CAPIF kann der CAPIF-CCS-Knoten einem Nutzer, nach einer Authentisierung gegenüber CAPIF CCS, die Credentials bereitstellen, um auf das NEF zuzugreifen.

Die Aufgabe der Erfindung besteht darin, die Administration der zum Schutz der TSN-Kommunikation erforderlichen Sicherheitsparameter unterschiedlicher TSN-Domänen zusammenzuführen.

Diese Aufgabe wird durch die Merkmale gemäß den unabhängigen Patentansprüchen gelöst. Vorteilhafte Ausführungsformen der vorliegenden Erfindung sind in den abhängigen Ansprüchen beschrieben.

Die Erfindung beansprucht ein Verfahren zum geschützten Einrichten von mindestens einem Echtzeit-Datenfluss in einem Kommunikationssystem für eine Echtzeitübermittlung von Daten, vorzugsweise zeitkritischen Daten, welches wenigstens eine erste Domäne umfassend zumindest eine erste Kommunikationseinrichtung und wenigstens eine zweite Domäne umfassend mindestens eine zweite Kommunikationseinrichtung aufweist, welche jeweils unterschiedliche Kommunikationsschnittstellen zum Einrichten des mindestens einen Datenflusses und/oder unterschiedliche Übertragungsmechanismen zur Übermittlung der Daten in den mindestens einen einrichtbaren bzw. eingerichteten Echtzeit-Datenfluss verwenden, wobei das Kommunikationssystem eine domänenübergeordnete Echtzeit-Steuerungseinrichtung umfasst, welche mit den jeweiligen genannten Kommunikationsschnittstellen verbindbar bzw. koppelbar und/oder über welche die Übermittlung der Daten leitbar ist (oder mit den jeweiligen genannten Kommunikationsschnittstellen verbunden sind und/oder über welche die Übermittlung der Daten geleitet werden), aufweisend folgende Schritte, die durch die Echtzeit-Steuerungseinrichtung durchgeführt werden:
- Bereitstellen einer digitalen Stellvertretereinrichtung, die die mindestens eine zweite Kommunikationseinrichtung virtuell nachbildet,
- Konfigurieren erster kryptographischer Sicherheitsparameter in der digitalen Stellvertretereinrichtung, die zum Kommunikationsverbindungsaufbau zum geschützten Einrichten von mindestens einem Echtzeit-Datenfluss virtuell verwendet werden, wobei mit den Sicherheitsparametern das Einrichten selbst und/oder die Daten, die über den mindestens einen eingerichteten Echtzeit-Datenfluss übermittelt werden, geschützt werden,
- Durchführen einer Simulation des geschützt durchzuführenden Einrichtens,
- Ermitteln von zweiten kryptographischen Sicherheitsparameter aus zumindest einem Simulationsergebnis, die zu der Kommunikationsschnittstelle und/oder zu dem Übertragungsmechanismus, welche beide in der wenigstens eine zweite Domäne verwendet werden, passen,
- Konfigurieren der zweiten kryptographischen Sicherheitsparameter in der mindestens einen zweiten Kommunikationseinrichtung, welche zum Kommunikationsverbindungsaufbau für das geschützt durchzuführende Einrichten real verwendet werden.

Die genannte Kommunikationsverbindung kann unter Verwendung der zweiten kryptographischen Sicherheitsparameter aufgebaut werden. Die ersten kryptographischen Sicherheitsparameter können auch zum Schutz der Stellvertretereinrichtung verwendet werden. Die genannte Echtzeit-Steuerungseinrichtung kann als eine Art "Trust-Broker" verstanden werden, der die Administration der zum Schutz der Kommunikation erforderlichen kryptographischen Schutzparameter unterschiedlicher Domänen zusammenführt. Es kann sich dabei um ein zentrales System (CNC, centralized network control) handeln, jedoch kann es auch verteilt realisiert sein.

Die Sicherheitsparameter können unter anderem sogenannte Credentials (z.B. kryptographische Schlüssel, digitale Zertifikate, Authentisierungstoken, Trust Anchor, Identifier) bzw. Identifikatoren kryptographischer Algorithmen umfassen. Die genannte Steuerungseinrichtung richtet bzw. konfiguriert die Echtzeit-Datenflüsse in zumindest einer der beiden Domänen ein. Dazu stellt die Steuerungseinrichtung eine Stellvertretereinrichtung, welche die zweite oder mehrere zweite Kommunikationseinrichtung nachbildet bzw. simuliert bereit, die die übergeordnete Echtzeit-Steuerungseinrichtung geschützt konfiguriert und dabei auch eine Sicherheitskonfiguration mit Sicherheitsparametern auf dieser Stellvertretereinrichtung einrichtet. Die Steuerungseinrichtung simuliert die zweite Kommunikationseinrichtung entsprechend der eingerichteten Konfiguration (isoliert für die Kommunikationseinrichtung; optional im Zusammenspiel mit weiteren, auch realen Kommunikationseinrichtungen). Basierend auf den Simulationsergebnissen wird die real vorhandene zweite Kommunikationseinrichtung von der Steuereinrichtung konfiguriert.

Dies hat den Vorteil, dass in mehreren unterschiedlichen Domänen des Kommunikationssystems bzw. -netzwerks unterschiedliche Formate, Protokolle und Sicherheits-Infrastrukturen für das Schutz-Management und für den Schutz der Steuerungskommunikation verwendet werden können. Die Sicherheitsparameter einer Domäne sind dabei unter Kontrolle der jeweiligen verantwortlichen Stelle. Dennoch wird für einen Anwender der Eindruck erreicht, als ob es sich um ein einheitliches (homogenes) Netzwerk handeln würde. Dies ermöglicht insbesondere einem OT-Betreiber, ein Netzwerk beispielsweise nach dem Standard IEC/IEEE60802 einheitlich zu nutzen, obwohl in manchen Teilbereichen die Echtzeit-Funktionalität unterschiedlich realisiert ist (z.B. 3GPP 5G TSC, ein TSN-Netzwerk eines Telko-Providers oder ein generisches TSN-Netz einer Enterprise (Unternehmen)-Infrastruktur). Der OT-Betreiber kann in der zweiten Domäne ein einheitliches Sicherheitsmanagement zum Schutz der Kommunikationsschnittstellen (insbesondere von einem TSN IA-Controller zu TSN IA-Geräten) und/oder zum Schutz von Echtzeitnachrichten (Zeitsynchronisationsnachrichten, Nutzerdaten) verwenden, das für ihn transparent in entsprechenden Schutz in einer anderen Domäne umgesetzt wird. Dies kann auch so verstanden werden, dass ein OT-spezifisches Netzwerk entsprechend IEC/IEEE60802 nachgebildet wird, obwohl technisch ein allgemeines Echtzeit-Netzwerk vorliegt. Ein OT-Nutzer kann dieses wie ein tatsächlich gemäß IEC/IEEE60802 realisierte Echtzeit-Infrastruktur verwenden. Anders ausgedrückt, realisiert die Steuerungseinrichtung dazu eine Art Spiegelung der Sicherheitsparameter ("Credential-Spiegelung" und/oder eine entsprechende "Identität-Spiegelung") zwischen zumindest zwei Domänen. Nach dem Aufbau der Kommunikationsverbindung können die konfigurierten ersten und/oder zweiten Sicherheitsparameter in Echtzeit, vor allem im laufenden Betrieb, angepasst werden (oder die konfigurierten ersten und/oder zweiten Sicherheitsparameter werden angepasst).

Die Steuerungseinrichtung kann ein verwaltetes Verzeichnis (Repository) bereitstellen, welche die in der zumindest einen ersten und der mindestens eine zweite Domäne unterschiedlich verwendeten Vertrauensbeziehungen aufeinander abbildet, wobei eine Vertrauensbeziehung durch die den Kommunikationseinrichtungen zugeordneten kryptographischen Sicherheitsparameter und gegebenenfalls domänenspezifischen Richtlinien (Policies) gekennzeichnet ist. Die real verwendeten kryptographischen Sicherheitsparameter können aus den virtuell verwendeten kryptographischen Sicherheitsdaten mit Hilfe des verwalteten Verzeichnisses ermittelt werden.

Die in der zweiten Domäne sichtbaren virtuellen Sicherheitsparameter, die der ersten Domäne zugeordnet sind, werden dabei technisch innerhalb der ersten Domäne nicht verwendet. Es gibt also zumindest zwei Arten von Sicherheitsparameter, d.h. in einer zweiten Domäne tatsächlich technisch genutzte und zugeordnete "virtuelle" Sicherheitsparameter, mit dem Management-Operationen in der ersten Domäne erfolgen können. Diese werden auf entsprechende Aktionen bezüglich der realen Schutzparameter abgebildet, aber technisch werde die virtuellen Schutzparameter nicht in der jeweils anderen Domäne genutzt.

Das Verfahren und dessen Weiterbildungen ist vorzugsweise rechner-/computergestützt bzw. computerimplementiert ausgebildet bzw. wird vorzugsweise rechner-/computergestützt bzw. computerimplementiert ausgeführt. Die Schritte des Verfahrens können beliebig oft wiederholt werden und Wiederholungen können ggf. anhand definierter Bedingungen, sei es ereignisorientiert oder zeitlich begrenzt, beendet werden.

Ein weiterer Aspekt der Erfindung ist ein System, insbesondere eine domänenübergeordnete Echtzeit-Steuerungseinrichtung geeignet zum geschützten Einrichten von mindestens einem Echtzeit-Datenfluss in einem Kommunikationssystem für eine Echtzeitübermittlung von Daten, welches wenigstens eine erste Domäne umfassend zumindest eine erste Kommunikationseinrichtung und wenigstens eine zweite Domäne umfassend mindestens eine zweite Kommunikationseinrichtung aufweist, welche jeweils unterschiedliche Kommunikationsschnittstellen zum Einrichten des mindestens einen Datenflusses und/oder unterschiedliche Übertragungsmechanismen zur Übermittlung der Daten in den mindestens einen einrichtbaren Echtzeit-Datenfluss verwenden, wobei das System mit den jeweiligen genannten Kommunikationsschnittstellen koppelbar und/oder über welche die Übermittlung der Daten leitbar ist und das System derart ausgebildet ist, die oben genannten Schritte des Verfahrens durchzuführen.

Des Weiteren kann ein Computerprogrammprodukt eingesetzt werden, umfassend ein nichtflüchtiges Speichermedium, auf dem ein ladbarer und ausführbarer Programmcode gespeichert ist, welcher das Verfahren nach einem der oben genannten Ausführungsformen in einer Prozessoreinheit insbesondere einer oder verteilt in mehreren Vorrichtungen nach einer der vorhergehend beschriebenen Ausführungsformen ausführt.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die Ausführungsumgebung erstellt werden kann.

Das System bzw. Einrichtungen, Vorrichtungen, Einheiten bzw. Geräte und Computerprogramm(-produkte), welches einen ladbaren und ausführbaren Programmkode oder verteilt ladbare und ausführbare Programmkodemodule umfassen kann, können entsprechend der Weiterbildungen/Ausführungsformen des vorgenannten Verfahrens und deren Weiterbildungen/Ausführungsformen und umgekehrt ausgebildet sein.

Eine Ausführungsform der Erfindung sieht vor, dass in das System ein oder mehrere Module bzw. Einheiten bzw. Komponenten bzw. Einrichtungen integriert sein können und diese als eine Software-, Firmware- bzw. Hardware-Komponente ausgebildet sein können. Das System umfasst in der Regel wenigstens einen Prozessor, der auf Betriebssystemebene als Betriebssystemkern Operationen ausführen kann.

Das sowie das Computerprogramm(-produkt) und computerlesbaren Medien bzw. Datenträger bzw. Datenträgersignal können analog zum oben genannten Verfahren und dessen Weiterbildungen weiter- bzw. ausgebildet sein.

Bei einem Prozessor bzw. Prozessoreinheit kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit) oder um ein Multi-Chip-Modul handeln, insbesondere einen FPGA (engl. Field Programmable Gate Array) oder einen ASIC (anwendungsspezifische integrierte Schaltung, engl. Application-Specific Integrated Circuit), ein SoC (System on Chip) einen Grafikprozessor GPU (Graphics Processing Unit), einen Prozessor zur Auswertung eines neuronalen Netzes wie beispielsweise eine TPU (Tensor Processing Unit) oder einen DSP (Digitaler Signalprozessor, engl. Digital Signal Processor) handeln. Der Prozessor kann eine oder mehrere Rechenkerne (multi-core) aufweisen. Auch kann unter einem Prozessor ein virtualisierter Prozessor oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens oder anderer Aspekte und Teilaspekte der Erfindung implementiert. Der Prozessor kann einen Tamper-Schutz zum Schutz vor physikalischen Manipulationen aufweisen, z.B. Tamper-Sensoren zur Detektion physikalischer Angriffe.

### Ausführungsbeispiele der Erfindung

Ausführungsbeispiele des erfindungsgemäßen Verfahrens und Systems sind in den Zeichnungen beispielhaft dargestellt und werden anhand der nachfolgenden Beschreibung näher erläutert. Es zeigen:
Die Figur 1 eine beispielhafte Anordnung eines TSN-Kommunikationssystems, in dessen Kontext das erfindungsgemäße Verfahren angewandt werden kann, und
Figuren 2 und 3 ein Ablaufdiagramm zum erfindungsgemäßen Vorgehen, und
Figur 4 die erfindungsgemäße Steuerungseinrichtung mit seinen Funktionen und Einheiten.

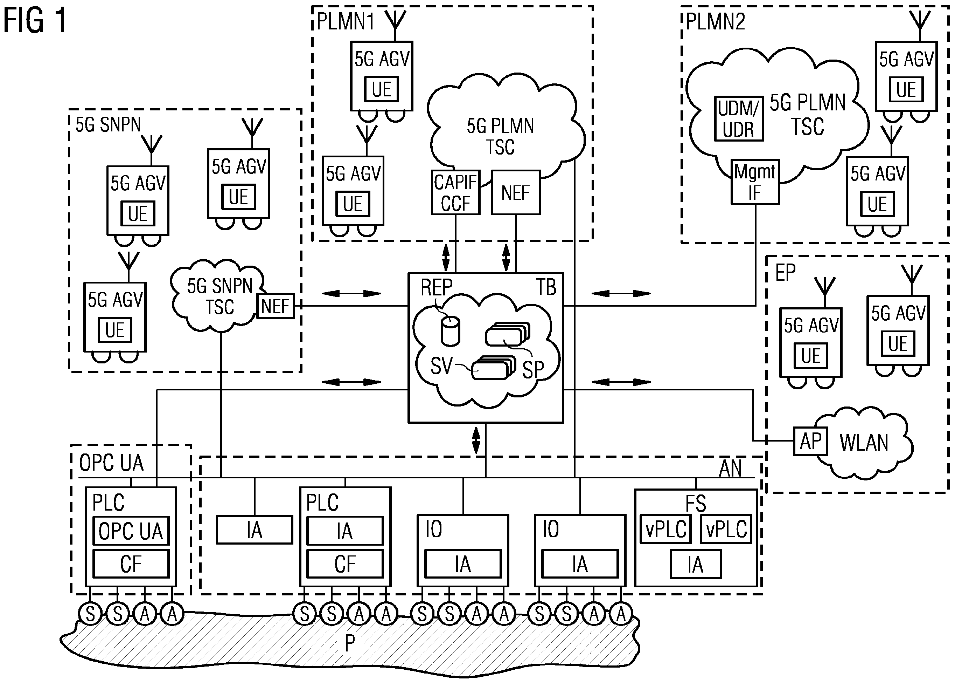

In Figur 1 ist ein industrielles TSN-Automatisierungsnetzwerk AN nach IEC/IEEE60802 mit dem eine herkömmliche Hardwarebasierte SPS, mit PLC gekennzeichnet, sowie zwei virtualisierte SPS, mit vPLC gekennzeichnet, gezeigt, die als Software-basierte App (Applikation) auf einem (Factory) Server FS realisiert sind. Diese unterstützen von sich aus TSN nach IEC/IEEE60802. Diese sind spezifisch für die Anwendung von TSN in der Automatisierung ausgelegt. Im Automatisierungsnetzwerk AN ist ein TSN IA-Controller IA vorgesehen, der die TSN-Variante gemäß IEC/IEEE60802 unterstützt. Im dargestellten Szenario sind jedoch auch TSN-Netzwerkbereiche vorhanden, die ein TSN nach IEC/IEEE60802 nicht unterstützen. Es sind als mögliche Domänen ein privates 5G-Fabriknetz 5G SNPN sowie zwei öffentliche 5G-(Mobilfunk-)Netzwerk PLMN1 und PLMN2 vorgesehen. Diese unterstützten mit TSC (TSC: time sensitive communications) zwar einen TSN-Dienst, dieser wird technisch aber anders geschützt und anders geschützt administriert als es im Standard IEC/IEEE60802 definiert ist. Im dargestellten Beispiel wird TSC im 5G SNPN über eine direkt zugreifbare NEF-Schnittstelle NEF eingerichtet und konfiguriert. Der TSC-Dienst im 5G-Netzwerk - mit 5G PLMN TSC gekennzeichnet - wird über eine separate NEF-Schnittstelle eingerichtet und konfiguriert, der über das CAPIF-Framework CAPIF verfügbar gemacht wird, d.h. über den CCF-Knoten (CCF: CAPIF Core Function) zugreifbar gemacht wird. Im dargestellten Beispiel sind mehrere AGVs (automated guided vehicle), gekennzeichnet mit 5G AGV vorgesehen, die über die genannten 5G-Netzwerke kommunizieren. Im Indoor(Innen)-Bereich innerhalb einer Werkshalle verwenden sie die Domäne des privaten 5G-Fabriknetzwerkes, im Außenbereich die Domäne des öffentlichen 5G-Netzwerkes.

Weiterhin ist eine Enterprise-WLAN-Infrastruktur EP dargestellt, die ebenfalls TSN unterstützt. Auch diese unterstützt aber nicht die spezielle durch IEC/IEEE60802 definierte TSN-Variante. Hier sind entsprechend über einen WLAN Access Manager, gekennzeichnet mit WLAN, die TSN-Konfiguration eingerichtet, wobei der WLAN Access Manager die WLAN-Zugangspunkte AP des Enterprise-WLANs verwaltet. Dies kann beispielsweise über ssh (Command Line), über SNMP, oder über RESTCONF/YANG erfolgen. Dabei ist zu berücksichtigen, dass im WLAN (wie auch im oben beschriebenen 5G-Fall) in der Regel nicht nur andere Protokolle für den TSN-Access-Manager, sondern auch andere Datenmodelle und andere Schutzparameter und Formate für Schutzparameter angewendet werden.

Zum kryptographischen Schutz der TSN-Konfiguration der Kommunikationseinrichtungen UE, die in beispielsweise AGVs (und des jeweiligen 5G-Systems) integriert sind, werden Schutzparameter wie Schlüsselmaterial und eine TSN-Konfiguration sicher (indirekt über die NEF-Schnittstelle der beiden 5G-Netze 5G SNPN und PLMN1 sowie für die WLAN-basierte TSN-Domäne) eingerichtet, damit die AGVs in den 5G-Netzen die durch den 5G-TSC-Dienst bereitgestellte TSN-Funktionalität (Echtzeit-funktionalität) und die durch das Enterprise-WLAN unterstützte TSN-Funktionalität nutzen können. Die eigentliche TSN-Konfiguration zur TSN-Funktionalität wird dabei auf den entsprechenden TSC-Dienst abgebildet, indem dieser über entsprechende API-Aufrufe (Application Programing Interface) der NEF eingerichtet wird. Die durch den TSC-Dienst des 5G-Netzes virtualisiert nachgebildeten Kommunikationseinrichtung (z.B. in einer TSN-Brücke, in einem TSN-Gerät) können dabei mittels der Sicherheitsparameter nach IEC/IEEE60802 geschützt konfiguriert werden. Technisch wird aber der Zugriff auf die NEF-Schnittstelle durch eine domänenübergeordnete Steuerungseinrichtung, sogenannter Trustbroker TB, geschützt, wie es durch den Standard von 3GPP in 5G-Netzen spezifiziert (CAPIF, NEF) ist. Innerhalb des 5G-Systems werden die innerhalb des 5G-Systems verwendeten Sicherheitsverfahren und Sicherheitsparameter verwendet, welche durch 3GPP spezifiziert sind. Diese 5G-Sicherheitsparameter liegen dann auch dem AGV bzw. auf dem UE (z.B. ein 5G-Modem) des AGV vor, sodass innerhalb des 5G-Systems die spezifizierten Sicherheitsverfahren zur Anwendung kommen (z.B. kryptographischer Schutz der Integrität und/oder Vertraulichkeit der Übertragung zwischen UE und 5G-Mobilfunknetz via User Plane und Control Plane).

Es können auch weitere Varianten vorgesehen sein, um eine TSN-Netzwerkfunktionalität einzurichten und im Betrieb anzupassen, z.B. abhängig von einem aktuellen Produktionsauftrag oder abhängig von der aktuellen Plug-and-Work-Konfiguration eines flexibel anpassbaren Automatisierungssystems.

Die TSN-Funktionalität mancher Automatisierungskommunikationseinrichtungen, im Beispiel Control Function CF von Automatisierungskomponenten z.B. PLC oder Automatisierungsbereiche/Teilnetze kann über eine OPC UA basierte TSN-Einrichtung erfolgen. Die Automatisierungskomponenten können über Sensoren S und Aktoren A physikalisch mit anderen Hardwarekomponenten gekoppelt sein, die in Figur 1 mit P gekennzeichnet sind. Auch ist es möglich, dass manche Mobilfunknetze die TSN-Funktionalität (bzw. den entsprechenden TSC-Dienst eines Mobilfunknetzes) nicht über eine NEF-Schnittstelle exponieren, sondern über proprietäre Management-Schnittstellen Mgmt IF (z.B. Zugriff auf ein UDM/UDR - unified data management / unified data repository eines 5G-Mobilfunksystems). Auch ist es möglich, dass manche 5G-Mobilfunknetz-Realisierungen zusätzlich oder anstatt der von 3GPP spezifizierten TSC-Variante, die eine generische TSN-Brücke durch das 5G-System virtuell nachbildet, eine virtuelle TSN-IA-Brücke IO entsprechend dem Standard IEC/IEEE60802 nutzen, sodass diese aus Sicht eines TSN-Automatisierungsnetzes direkt integriert werden kann. Bei dieser Ausführungsform kann der Trust Broker im 5G-Netzwerk vorgesehen sein, um bei den industriellen Anwendern dieses speziellen 5G-Netzwerks den Anschein zu erwecken, dass es sich um eine TSN-IA-Brücke gemäß IEC/IEEE60802 handeln würde, unabhängig davon, wie technisch die TSN-Funktionalität im 5G-Netzwerk tatsächlich umgesetzt ist.

Der erfindungsgemäße Trust Broker TB, der auch als TSN Admin Domain Broker bezeichnet werden kann, bildet virtualisierte IEC/IEEE60802-TSN-Knoten nach, vorzugsweise Kommunikationseinrichtungen auf die der Zugriff über virtuelle IEC/IEEE60802-TSN-Sicherheitsparameter möglich ist (z.B. über die Kommunikationsschnittstelle NETCONF-over-TLS, gemäß dem durch IEC/IEEE60802 definierten YANG-Datenmodell). Dadurch kann der im Automatisierungsnetzwerk vorliegende TSN-Controller IA die Funktionen des privaten und des öffentlichen 5G-Netzes und des Enterprise-WLANs gemäß IEC/IEEE60802 einrichten und nutzen. Diese 5G-Domänen weisen in der Regel unterschiedliche Übertragungsmechanismen, insbesondere Protokolle (WLAN spezifische Protokolle, 5G spezifische Protokolle) auf. Die in IEC/IEEE60802 spezifischen Sicherheitsparameter SP und Sicherheits-Management-Protokolle zum Einrichten des IEC/IEEE60802-Schlüsselmaterials werden technisch nicht verwendet. Dabei muss der im Automatisierungsnetzwerk vorliegende TSN-Controller auch nicht die im privaten 5G-Netz und im öffentlichen 5G-Netz und im Enterprise-WLAN-Netz verwendeten unterschiedlichen Sicherheitsverfahren unterstützten oder auch nur unterscheiden.

Diese Nachbildung oder Simulation eines IEC/IEEE60802-TSN-Netzwerks durch den (TSN) Trust Broker kann auch als ein "Digital TSN Sicherheitszwilling" verstanden werden, der die Sicherheit eines IEC/IEEE60802-TSN-Netzwerks simuliert. Unter Simulation ist zu verstehen, dass es für den im Automatisierungsnetzwerk vorliegende TSN-Controller so aussieht, als ob es sich um ein reguläres TSN-Netzwerk entsprechend des IEC/IEEE60802 handeln würde. Dazu wird eine digitale Stellvertretereinrichtung SV bereitgestellt, die ein oder mehrere Kommunikationseinrichtungen in einem oder mehreren 5G-Netzwerken nachbildet. Dabei kann die Durchführung von TSN-Verwaltungsoperationen, insbesondere dem geschützten Einrichten eines Echtzeitdatenstroms/-flusses oder dem Einrichten von Sicherheitsparametern (z.B. Credentials) zum Schutz des Einrichtens eines Echtzeitdatenstroms, und/oder die Echtzeitdatenübertragung zumindest eines Echtzeitdatenstroms simuliert werden. Es kann bei der Simulation zumindest die Sicherheitsfunktionalität eines IEC/IEEE60802-TSN-Netzwerks und/oder einer simulierten oder realen IEC/IEEE60802-TSN-Kommunikationseinrichtung simuliert werden. Für die Simulation können zusätzlich oder anstatt von in dem Kommunikationssystem für eine Echtzeitübermittlung tatsächlich übertragenen Daten, z.B. übertragene Echtzeitsteuerdaten und übertragene Echtzeitnutzerdaten, auch Test-Echtzeitsteuerdaten und/oder Test-Echtzeitnutzerdaten verwendet werden, um das Simulationsergebnis zu ermitteln.

Im Beispiel sind nur zwei 5G-Netze dargestellt. Allgemein können auch weitere 5G-Netze verwendet werden, z.B. eines weiteren Netzbetreibers oder ein, mit einem öffentlichen 5G-Netzwerk integrierten, privates 5G-Netzwerk (PNI-NPN, public network integrated - non public network). Ebenso kann die Nutzung eines mit weit verbreiteten IT-Standards konforme Umsetzung eines allgemeinen TSN-Netzwerks, z.B. ein von einer IT-Abteilung bereitgestelltes Enterprise-TSN Netzwerk, ebenso in eine IEC/IEEE60802-Automatisierungs-TSN-Netzwerk integriert werden.

Es ist in der Figur 1 nur ein Enterprise-WLAN-Netzwerk dargestellt. Es können auch weitere WLAN-Netze, z.B. zusätzlich zu einem 5G-SNPN-Netzwerk auch ein oder mehrere WLAN-Netzwerke in einer Fabrik eingerichtet sein.

Die Sicherheitsparameter zum Schutz des TSN-Netzwerks können betreffen:
- Zugriff auf TSN-Steuerungsfunktionen durch einen TSN-Controller (z.B. über NETCONF over ssh, NETCONF over TLS, RESTCONF, OPC UA FX, direkter Zugriff auf 5G NEF, Zugriff auf 5G NEF über CAPIF-Framework, Zugriff auf eine (proprietäre) Management-Schnittstelle des 5G-Netzwerks; Nutzung von unterschiedlichen Sicherheitsparameterformaten, -herausgebern, und unterschiedlichen Datenformaten für die Sicherheitskonfiguration und - management, z.B. unterschiedlichen YANG-Datenmodelle).
- Schutz von Zeitsynchronisationsnachrichten (g)PTP (z.B. MACsec, IPsec, TLS, auf PTP-Nachrichten-Ebene, durch WLAN-Linkverschlüsselung oder durch 5G-User-Plane-Security)
- Schutz von Nutzerdaten (z.B. MACsec, IPsec, TLS, OPC UA, durch WLAN-Linkverschlüsselung oder durch 5G-User-Plane-Security)

So kann der Trust Broker z.B. bei Nutzung eines 5G-Netzwerks einen Schutz von Zeitsynchronisationsnachrichten (PTP, gPTP) durch ein virtuelles MACsec nachbilden: Gegenüber dem IEC/IEEE60802-Automatisierungsnetzwerk bzw. dessen TSN-Controller sieht es so aus, als ob die Nutzung von MACsec eingerichtet ist. Tatsächlich erfolgt aber der Schutz durch eine 5G User Plane unter Nutzung der im 5G-System/-Netzwerk vorhandenen Schlüssel.

Weiterhin ist es möglich, dass eine Abonnenten-Vorlage (Subscription-Template), das in einem 5G-Netzwerk für ein Teilnehmergerät als Nutzer-Profil verwendet wird, abhängig von zumindest einem dem Teilnehmergerät bzw. dessen 5G-Nutzer (Subscriber) zugeordnetem Geräte-Sicherheitsparametern ausgewählt wird. Bei dem für die Profilauswahl verwendeten Sicherheitsparametern kann es sich um das im 5G-Netzwerk verwendete Authentisierungs-Credential (z.B. Gerätezertifikat IDevID, LDevID oder d.h. mit den für IEC/IEEE60802 spezifischen Zertifikatserweiterungen) handeln.

Weiterhin ist es möglich, dass die Auswahl des Subscription-Templates oder der TSC-Konfiguration abhängig von der der Kommunikationseinrichtung des Geräts zugeordneten, im Automatisierungsnetzwerk vorliegenden Projektierungsinformation (bzw. einer entsprechenden Information, die z.B. in einer Common-Data-Management-Datenbank oder einer Asset Management-Datenbank vorliegt) erfolgt. Durch die Projektierungsinformation können die benötigten durch den Trust Broker virtuell nachzubildenden Vertrauensbeziehungen ermittelt werden, um daraus zu ermitteln, auf welche Art diese auf die unterschiedlichen technisch real verwendeten TSN-Sicherheitsparametern durch den Trust Broker abzubilden sind. Durch den TSN-Trust-Broker wird dabei eine Entkopplung der TSN-bezogenen Projektierung durch einen OT-Betreiber und der Abbildung auf unterschiedliche TSN-Realisierungen erreicht. Dadurch müssen in der regulären OT-Projektierung einer Automatisierungslösung die spezifischen, technisch unterschiedlichen Sicherheitsverfahren zum Schutz der unterschiedlichen TSN-Kommunikationssysteme nicht berücksichtigt werden. Ein OT-Betreiber muss sich daher nicht mit den 5G-spezifischen Konfigurationsmöglichkeiten des 5G-TSC-Dienstes befassen, sondern kann die Vorgaben projektieren, so wie es bei IEC/IEEE60802 spezifisch für die Automatisierungsdomäne vorgesehen ist. Es erfolgt automatisiert eine Abbildung auf die entsprechenden Konfigurationen im 5G-System, z.B. in einem Authentisierungs-Server oder UDM-Server oder UDR-Server des 5G-Systems (UDM: unified data management; UDR: unified data repository), das in der Figur 1 mit UDM/UDR gekennzeichnet ist.

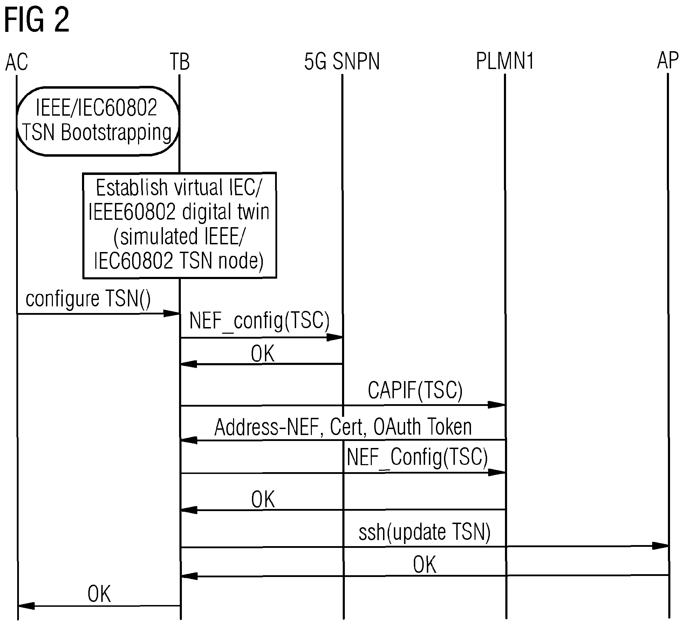

Die Figur 2 zeigt ein Ablaufdiagramm. Im gezeigten Ablauf wird ein vereinfachtes Anwendungsszenario mit lediglich zwei 5G-Netzwerken 5G SNPN und PLMN 1 und einem WLAN-Access Controller z.B. AP (alle drei auch zweite Domänen genannt) angenommen. Der TSN-Controller, z.B. CNC in industriellen Automatisierungsnetzwerk AN nach IEC/IEEE60802 (auch erste Domäne genannt) konfiguriert die TSN-Funktionalität wie durch IEC/IEEE60802 spezifiziert. Dazu gehört ein spezielles Bootstrapping, um Sicherheitsparameter gemäß IEC/IEEE60802 zum Konfigurieren der TSN-Funktionalität auf Kommunikationseinrichtungen festzulegen. Bootstrapping in diesem Kontext umfasst die Einrichtung von Sicherheitsparametern wie zu nutzende kryptographische Algorithmen, einen Trust Anchor, Security Credentials die im Kontext der Authentisierung eines TSN-Gerätes benötigt werden, potentiell erwartete Rolleninformation, aber auch weitere TSN-spezifische Parameter. Der Trust Broker TB stellt eine Stellvertretereinrichtung SV bereit und bildet damit für die TSN-Konfiguration zumindest eine Kommunikationseinrichtung nach IEC/IEEE60802 virtuell nach. Dadurch kann aus Sicht des IEC/IEEE60802-Netzwerks und dessen TSN-Controllers das Netzwerk einheitlich als ein TSN-Netzwerk nach IEC/IEEE60802 verwendet werden. Dadurch kann eine TSN-Kommunikation nach IEC/IEEE60802 auch dann verwendet werden, wenn andere Netzwerkbereiche verwendete werden sollen, die selbst zwar kein TSN nach IEC/IEEE60802 aber TSN nach anderen technischen Ausgestaltungen unterstützen.

Der Trust Broker passt dazu die TSN-Konfiguration mit Sicherheitsparametern (auch zweiten Sicherheitsparametern genannt) der anderen TSN-Systeme (in der Figur 2: 5G SNPN, PLMM, AP) so an, dass sie zu der durch den IEC/IEEE60802-TSN-Controller IA definierten TSN-Konfiguration mit Sicherheitsparametern (auch ersten Sicherheitsparametern genannt) der zumindest einen virtuellen, simulierten IEC/IEEE60802-TSN-Kommunikationseinrichtung passen. Dazu greift er mit unterschiedlichen Sicherheitsparametern ggf. über unterschiedliche Sicherheitsprotokolle auf die jeweiligen TSN-Kommunikationsschnittstellen der unterschiedlichen Systeme zu. So kann z.B. als Sicherheitsprotokoll TLS (Transport Layer Security) direkt für Zugriff auf eine 5G Network Exposure Function (NEF) verwendet werden, oder es kann ein indirekter Zugriff auf die NEF über eine CAPIF-Funktionalität (d.h. über die CAPIF Core Function CCF) realisiert werden, oder es kann der Zugriff über ssh (Secure Shell) erfolgen. Selbst wenn dabei z.B. TLS bei mehreren Varianten als Sicherheitsprotokoll verwendet wird, so sind für die TSN-Nutzung unterschiedliche TSN-Profile und unterschiedliche Sicherheitsparameterformate und unterschiedliche Berechtigungsmodelle definiert.

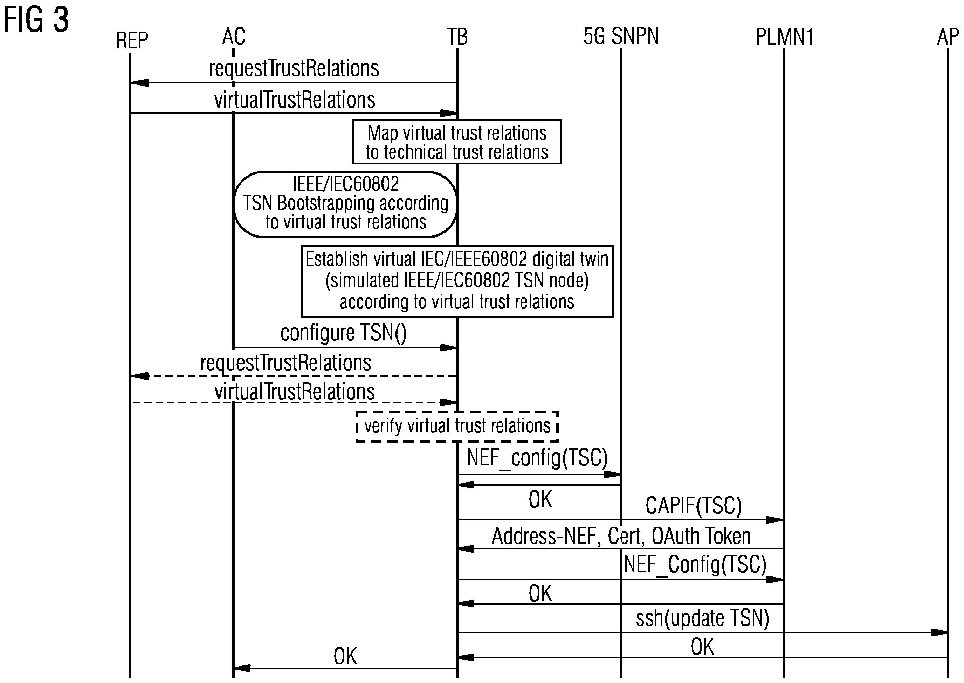

Die Figur 3 zeigt eine weitere Ausführungsform, bei der der Trust Broker eine separate, in der Figur 1 mit REP gekennzeichnetes, verwaltetes Verzeichnis, auch "Virtual Trust Domain Repository" Komponente genannt, verwendet, um zu ermitteln, welche virtuellen Vertrauensbeziehungen erforderlich sind. Die virtuellen Vertrauensbeziehungen beziehen sich die aus Sicht des TSN-Controllers auf die benötigten bzw. vorliegenden TSN-Vertrauensbeziehungen (z.B. Credential, Identifier, Berechtigungen von TSN-Komponenten). Diese TSN-Komponenten sind zwar real in dem Sinn, dass über sie eine TSN-Kommunikation ermöglicht wird und konfiguriert oder beeinflusst werden kann. Sie sind aber nicht real in dem Sinn, dass über sie tatsächlich eine TSN-Kommunikation aufgebaut ist, d.h. dass eine entsprechende TSN-Komponente tatsächlich bzw. real vorliegt, die gemäß IEC/IEEE60802 durch den TSN-Controller eingerichtet wird. Üblicherweise wird ein (zentraler) TSN IA Controller IA, der in Figur 1 in mehreren möglichen Ausführungsformen ggf. auch dezentral mit IA gekennzeichnet ist, für das Einrichten und Anpassen der TSN-Konfiguration für eine industrielle Automatisierungslösung nach IEC/IEEE60802 verwendet. Nur für die sichere, kryptographisch geschützte Verwaltung der TSN-Kommunikation nach IEC/IEEE60802 werden die Sicherheitsparameter - wie in IEC/IEEE60802 definiert - aufgesetzt. Die Information zu den erforderlichen virtuellen Vertrauensbeziehung wird durch den Trust Broker vom Virtual Trust Domain Repository abgefragt. Die den virtuellen Vertrauensbeziehungen entsprechenden realen, technisch zum Schutz der eigentlichen, realen TSN-Management-Funktionalität benötigten und verwendeten Vertrauensbeziehungen werden vom Tust Broker ermittelt, um dafür erfolgt ein entsprechendes Bootstrapping. Dabei werden die Sicherheitsparameter eingerichtet oder bereitgestellt, um die TSN-Management-Kommunikation und ggf. TSN-Kommunikation zwischen Kommunikationseinrichtungen zu den technisch tatsächlich für die Realisierung der TSN-Kommunikation tatsächlich vorhandenen TSN-Komponenten zu schützen.

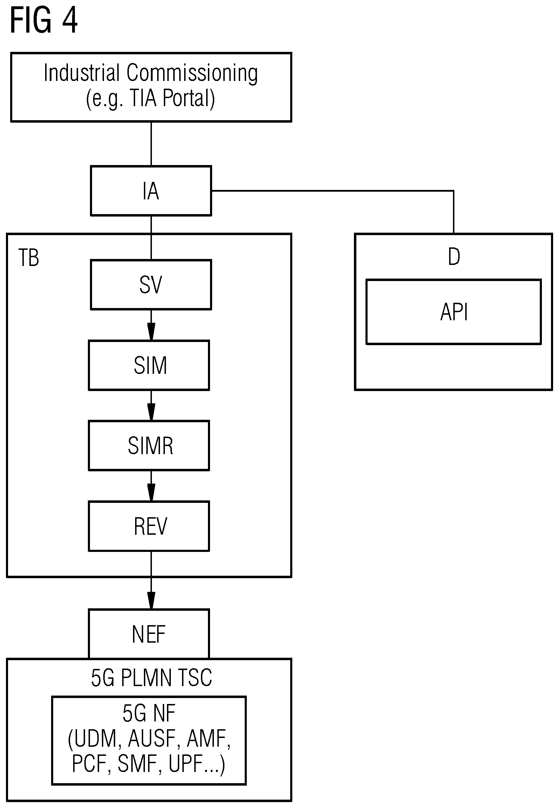

Figur 4 zeigt den Trust Broker TB mit seinen Funktionen und Einheiten bzw. Komponenten gegenüber den anderen Figuren detaillierter.

Figur 4 zeigt eine Mischung aus Komponenten und Aktionen des Trust Brokers. Auf einer realen Kommunikationseinrichtung, in der Figur 4 eine TSN-Netzwerkkomponente D, das ein PLC sein kann, werden die von einem TSN-Controller IA eingerichteten Sicherheitsparameter bei der TSN-Nutzung tatsächlich zum Schutz, insbesondere zum Schutz einer Management-Kommunikation zum Einrichten eines oder mehrerer TSN-Datenflüsse (TSN-Flows) und/oder auch der kryptographische Schutz der TSN-Flows selbst verwendet. Über diesen Weg können jedoch nur TSN-Netzwerkkomponenten bzw. -geräte verwaltet werden, die den speziellen TSN-Standard IEC/IEEE60802 unterstützten. Insbesondere passt dies nicht für 5G TSC, den TSN-Dienst eines 5G-Mobilfunknetztes. Bei diesem werden die TSN-Flows über ein Network Exposure Interface NEF des 5G-Mobilfunknetzes eingerichtet. Die Sicherheit zum Schutz der TSN-Kommunikation und des TSN-Managements erfolgt so, wie es durch 3GPP (3GPP TS33.501) durch das 5G-Mobilfunksystem spezifiziert ist.

Es wird eine digitale Stellvertretereinrichtung SV, die auch hier im Kontext als Dummy-TSN-Netzwerkkomponente (Dummy TSN IA) bezeichnet ist, die aus Sicht des TSN-Controllers nach dem Standard IEC/IEEE60802 verwaltet wird. Der TSN-Controller richtet bzw. konfiguriert dazu auf der Dummy-TSN-Netzwerkkomponente erste Sicherheitsparameter zum Schutz der TSN-Kommunikation ein. Diese werden jedoch nicht tatsächlich zum Schutz bei der TSN-Nutzung verwendet. Stattdessen werden diese in einer Simulation einer TSN-Netzwerkkomponente D beispielsweise mittels eines Simulationsmoduls SIM der Trust Brokers verwendet. In diesem Sinne sind die vom IEC/IEEE60802 TSN-Controller auf der Dummy-TSN-Netzwerkkomponente eingerichteten Sicherheitsparameter virtuell, da sie nur in einer Simulation verwendet werden, jedoch nicht bei der tatsächlichen TSN-Nutzung. Bei der tatsächlichen TSN-Nutzung - sei es zum Kommunikationsaufbau zum geschützten Einrichten selbst und/oder der Daten, die über die TSN-Datenflüsse übermittelt werden, wird zumindest eine TSN-Netzwerkkomponente (insbesondere ein TSC-Dienst eines 5G-Mobilfunknetztes) basierend auf den Simulationsergebnis der simulierten Dummy-TSN-Netzwerkkomponente konfiguriert, das in Figur 4 mit SIMR gekennzeichnet ist. Dabei werden reale verwendete zweite Sicherheitsparameter zum Schutz der tatsächlich auftretenden TSN-Kommunikation bzw. TSN-Nutzung verwendet, die den Simulationsergebnissen entsprechen. Dadurch wird ein aus Anwendersicht gleichartiger Schutz der TSN-Kommunikation erreicht, obwohl die vom TSN-Controller eingerichteten Sicherheitsparameter bei der eigentlichen TSN-Nutzung (Einrichten der TSN-Flows und Datenübertragung entsprechend dieser TSN-Flows) gar nicht verwendet werden.

Bei der Simulation wird zumindest eine, vorzugsweise TSN Netzwerkkomponente D simuliert. Die Netzwerkkomponenten D weist eine Verwaltungs-/Managementschnittstelle API auf, die zum Einrichten der TSN-Flows, Schutz des Managementkonfigurationvorgangs bzw. der Datenübertragung über TSN-Flows genutzt werden kann. Dabei können neben den Dummy-TSN-Netzwerkkomponenten zusätzlich auch real vorhandene TSN-Netzwerkkomponenten in der Simulation simuliert werden. Durch die Simulation wird ermittelt, was die eingerichtete TSN-Sicherheits-Konfiguration inhaltlich aus Anwendungssicht bedeutet. Dies kann als eine Art automatisiertes Reverse Engineering verstanden werden, das in Figur 4 mit REV gekennzeichnet ist. Es wird ausgewertet, welche Kommunikationsverbindungsaufbau zum geschützten Einrichten der TSN-Flows und welche TSN-Zugriffe zulässigerweise auftreten. Optional wird in der Simulation ebenfalls ermittelt, welche TSN-Flows auf welche Art kryptographisch geschützt sind.

Mögliche Weiterbildungen der Simulation:
- TSN-Management-Operationen simulieren
- Zusätzlich auch TSN-Nutzerdatenübertragung über TSN-Flows simulieren

Insbesondere sind die zulässigen Zugriffe nicht unmittelbar offensichtlich, da bei IEC/IEEE60802 komplexe Berechtigungsstrukturen vorliegen. Die Sicherheitsparameter können beinhalten:
- Credentials (X.509-Zertifikate) für IEC/IEEE60802enthalten neben Schlüsselmaterial auch eine Berechtigungsinformation (Rollen-basiert, RBAC: Rolebased Access Control)
- Berechtigungen können als Teil der eingerichteten TSN-Konfiguration eingerichtet werden (Access Control Module innerhalb des YANG-Models)
- Zugriffsmöglichkeiten bestehen nur, soweit akzeptierte Authentisierungscredentials (Authentisierungszertifikate und Trust Anchor) eingerichtet sind.
- Die Zugriffsmöglichkeiten können weiterhin technisch begrenzt sein abhängig von der implementierten Funktionalität einer TSN-Netzwerkkomponente.

Als Konsequenz sind die Vertrauensbeziehungen, d.h. welcher TSN-Knoten mit welchem anderen TSN-Knoten wie zulässigerweise kommunizieren kann und wie dies geschützt ist, nicht unmittelbar ersichtlich. Ein geschütztes Einrichten von mindestens einem Echtzeitdatenfluss betrifft z.B.:
- Tatsächliche TSN-Kommunikation, d.h. Übermittlung von (Nutzer-)Daten über einen eingerichteten TSN-Flow (Echtzeitkommunikation)
- TSN-Management-Kommunikation zum Einrichten des TSN-Flows
- Kommunikation zum Einrichten des Schutzes der TSN-Management-Kommunikation
- Ggf. kann weitere TSN-bezogene Kommunikation auftreten, z.B. DHCP, syslog, SNMP, ICMP).

Die Simulation spielt Kommunikationsszenarien durch (z.B. mittels Testdaten), um zu ermitteln, welche Art von Kommunikation tatsächlich bei der eingerichteten TSN-Konfiguration zulässigerweise auftritt. Dies bestimmt sich in der Regel nach Richtlinien in der jeweiligen Domäne. Auf dieser Basis (welche Netzwerkkommunikation kann auftreten): Einrichten einer entsprechenden Sicherheitskonfiguration (zulässige TSN-Kommunikationsbeziehungen für TSN-Kommunikation beispielsweise in einem 5G-Mobilfunknetz). Innerhalb des 5G-Mobilfunknetzes wird eigenständig die 5G-System-inhärente Sicherheitsfunktionen verwendet, um die tatsächlich auftretende TSN-Kommunikation zu schützen. Die 5G-System-inhärente Sicherheitsfunktionen ergeben sich aus den 5G-Netzwerkfunktionen (gekennzeichnet mit 5G NF), welche UDM, AUSF, AMF, PCF, SMF, UPF, etc. nach Definition von 3GGP umfassen können.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Unter "rechner-/computergestützt" bzw. "computerimplementiert" kann im Zusammenhang mit der Erfindung beispielsweise eine Implementierung des Verfahrens verstanden werden, bei dem insbesondere ein Prozessor, der Teil der (Steuerungs-/Rechen-)-einrichtung bzw. -vorrichtung bzw. -einheit sein kann, mindestens einen Verfahrensschritt des Verfahrens ausführt. Das Verfahren kann hierbei auch in einer Rechnerwolke (Cloud) implementiert sein, die das Verfahren ausführen kann und damit Ergebnisse des Verfahrens an eine Steuerungs-/Rechen-)-vorrichtung bzw. -einheit liefern kann, die entsprechende Befehle bzw. Maßnahmen an die Vorrichtungen insbesondere der oben genannten Anordnung richten kann.

Sofern es in der nachfolgenden Beschreibung nicht anders angegeben ist, beziehen sich die Begriffe "abbilden", "nachbilden", "empfangen", "anwenden", "ausgeben", "bereitstellen" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt oder vorliegen können.

Der Begriff "Prozessor", "zentrale Signalverarbeitung", "Steuereinheit" oder "Datenauswertemittel", umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequenziellen Verarbeitung bzw. Ausführung von Instruktionen ausgelegt bzw. konfiguriert sein.

## Patentansprüche

1. Verfahren zum geschützten Einrichten von mindestens einem Echtzeit-Datenfluss in einem Kommunikationssystem für eine Echtzeitübermittlung von Daten, welches wenigstens eine erste Domäne (AN) umfassend zumindest eine erste Kommunikationseinrichtung (PLC, vPLC) und wenigstens eine zweite Domäne (PLMN1, PLMN2) umfassend mindestens eine zweite Kommunikationseinrichtung (UE) aufweist, welche jeweils unterschiedliche Kommunikationsschnittstellen zum Einrichten des mindestens einen Datenflusses und/oder unterschiedliche Übertragungsmechanismen zur Übermittlung der Daten in den mindestens einen eingerichteten Echtzeit-Datenfluss verwenden, wobei das Kommunikationssystem eine domänenübergeordnete Echtzeit-Steuerungseinrichtung (TB) umfasst, welche mit den jeweiligen genannten Kommunikationsschnittstellen verbindbar und/oder über welche die Übermittlung der Daten leitbar ist, aufweisend folgende Schritte, die durch die Echtzeit-Steuerungseinrichtung durchgeführt werden:
- Bereitstellen einer digitalen Stellvertretereinrichtung (SV), die die mindestens eine zweite Kommunikationseinrichtung virtuell nachbildet,
- Konfigurieren erster kryptographischer Sicherheitsparameter (SP) in der digitalen Stellvertretereinrichtung, die zum Kommunikationsverbindungsaufbau zum geschützten Einrichten von mindestens einem Echtzeit-Datenfluss virtuell verwendet werden, wobei mit den Sicherheitsparametern das Einrichten selbst und/oder die Daten, die über den mindestens einen eingerichteten Echtzeit-Datenfluss übermittelt werden, geschützt werden,
- Durchführen einer Simulation (SIMR) des geschützt durchzuführenden Einrichtens,
- Ermitteln von zweiten kryptographischen Sicherheitsparameter aus zumindest einem Simulationsergebnis, die zu der Kommunikationsschnittstelle und/oder zu dem Übertragungsmechanismus, welche beide in der wenigstens eine zweite Domäne verwendet werden, passen,
- Konfigurieren der zweiten kryptographischen Sicherheitsparameter in der mindestens einen zweiten Kommunikationseinrichtung, welche zum Kommunikationsverbindungsaufbau für das geschützt durchzuführende Einrichten real verwendet werden.

2. Verfahren nach dem vorhergehenden Anspruch, **dadurch gekennzeichnet, dass** die genannte Kommunikationsverbindung unter Verwendung der zweiten kryptographischen Sicherheitsparameter aufgebaut wird.

3. Verfahren nach dem vorhergehenden Anspruch, **dadurch gekennzeichnet, dass** nach dem Aufbau der Kommunikationsverbindung die konfigurierten ersten und/oder zweiten Sicherheitsparameter in Echtzeit angepasst werden können.

4. Verfahren nach einem der vorhergehenden Ansprüche, **dadurch gekennzeichnet, dass** die konfigurierten ersten kryptographischen Sicherheitsparameter zum Schutz in der Stellvertretereinrichtung selbst verwendet werden.

5. Verfahren nach einem der vorhergehenden Ansprüche, **dadurch gekennzeichnet, dass** der Steuerungseinrichtung ein verwaltetes Verzeichnis (REP) bereitgestellt wird, welche die in der zumindest einen ersten und der mindestens einen zweiten Domäne unterschiedlich verwendeten Vertrauensbeziehungen aufeinander abbildet, wobei eine Vertrauensbeziehung durch die den Kommunikationseinrichtungen zugeordneten kryptographischen Sicherheitsparameter und gegebenenfalls domänenspezifischen Richtlinien gekennzeichnet ist.

6. Verfahren nach einem der vorhergehenden Ansprüche, **dadurch gekennzeichnet, dass** die real verwendeten kryptographischen Sicherheitsparameter aus den virtuell verwendeten kryptographischen Sicherheitsdaten mit Hilfe des verwalteten Verzeichnisses ermittelt werden.

7. System (TB) geeignet zum geschützten Einrichten von mindestens einem Echtzeit-Datenfluss in einem Kommunikationssystem für eine Echtzeitübermittlung von Daten, welches wenigstens eine erste Domäne (AN) umfassend zumindest eine erste Kommunikationseinrichtung und wenigstens eine zweite Domäne (PLMN1, PLMN2) umfassend mindestens eine zweite Kommunikationseinrichtung aufweist, welche jeweils unterschiedliche Kommunikationsschnittstellen zum Einrichten des mindestens einen Datenflusses und/oder unterschiedliche Übertragungsmechanismen zur Übermittlung der Daten in den mindestens einen einrichtbaren Echtzeit-Datenfluss verwenden, wobei das System mit den jeweiligen genannten Kommunikationsschnittstellen koppelbar und/oder über welche die Übermittlung der Daten leitbar ist und das System derart ausgebildet ist, die Schritte nach einem der vorhergehenden Verfahrensansprüche durchzuführen.

8. Computerprogrammprodukt umfassend ein nichtflüchtiges Speichermedium, auf dem ein ladbarer und ausführbarer Programmkode oder verteilt ladbare und ausführbare Programmkodemodule gespeichert sind, welches oder welche das Verfahren nach einem der vorhergehenden Verfahrensansprüchen auf einem oder mehreren Prozessoren eines Systems nach einem der vorhergehenden Systemansprüche ausführt.
